# EUROPEAN PATENT SPECIFICATION

(11) **EP 2 517 769 B1**
(45) Date of publication and mention of the grant of the patent: **20.01.2016**
(21) Application number: 12163671.6
(22) Date of filing: 11.04.2012
(51) Int. Cl.: B01D 33/23

(54) **Disc filter**
Scheibenfilter
Filtre à disque

(30) Priority: 29.04.2011 FI 20115410
(43) Date of publication of application: 31.10.2012
(73) Proprietor: Valmet Technologies Oy, 02150 Espoo (FI)
(72) Inventor: Gåsman, Mika, 48400 Kotka (FI); Kankaanpää, Veikko, 37600 Valkeakoski (FI)
(74) Representative: Kolster Oy Ab

(56) References cited:
- EP-A2- 0 413 178
- WO-A1-91/17806
- WO-A1-96/11735
- US-A- 3 610 419
- US-A1- 2008 035 584

## Description

### Background of the invention

The invention relates to a shaft for a disc filter comprising circumferentially to the shaft adjacently positioned casing parts, which casing parts are substantially parallel with the longitudinal direction of the shaft and which casing parts together form a casing of the shaft for the disc filter.

Disc filters are commonly used for fibre recovery and water purification in white water systems of paper and board machines. The disc filters comprise a rotatable shaft and longitudinally thereto a plurality of consecutively placed discoid filters, i.e. filter discs. Circumferentially to the shaft, the filter discs consist of filter sectors which are connected side by side to the shaft and which are sector-shaped filter structures separate from one another and surrounded by support edges.

In general, fibrous pulp is conveyed to disc filters in such a manner that fibrous pulp, i.e. pulp suspension, is fed through a feed tray into a vat in the lower part of the disc filter. When the disc filter is in operation, the pulp suspension is subjected to suction pressure, or suction effect, through disc filter sectors locating below the surface of the pulp suspension, as a result of which a fibre layer is formed on a wire coating constituting the surface of the disc filter within the areas defined by the support edges of the filter sectors. As a result of the same suction effect, water contained in the pulp suspension is filtered through the fibre layer deposited on the surface of the filter disc as a filtrate inside the filter sectors. Said fibre layer acts thus as a filter which removes particles from water flowing through the fibre layer in question. The filtrate entered in the filter sectors is forwarded to respective filtrate channels inside the disc filter shaft, and further out of the disc filter.

The fibre layer, i.e. precipitated pulp, formed on the surface of the filter disc will be removed as the filter disc revolves above the surface of the fibre pulp suspension in the disc filter vat. This is generally performed in such a manner that the suction pressure is discontinued, whereby the fibre layer may detach from the filter disc by the effect of gravity alone. In general, detachment of the fibre layer is enhanced, however, by means of water jets directed thereto. The detachment of the fibre layer may also be enhanced by providing inside the filter sector a higher pressure than the atmospheric pressure via a respective filtrate channel of each filter sector. The fibre layer detached from the filter disc falls into chutes between the filter discs, on the bottom of which chutes there is typically a screw conveyor for removing the precipitated pulp from the disc filter. US publications 4,136,028 and 5,792,352 disclose some disc filters.

The disc filter shaft typically comprises a central shaft and sector plates attached to the central shaft, directed outwardly from the central shaft and in their longitudinal direction parallel with the shaft. Further, the disc filter shaft comprises a casing for the disc filter shaft attached in connection with said sector plate ends directed away from the central shaft, whereby the sector plates are arranged to divide the volume between the central shaft and the casing, circumferentially to the central shaft, into mutually separated filtrate channels inside the shaft.

The casing of a previously known disc filter shaft consists of planar or plate-like casing parts, which are in their longitudinal direction substantially parallel with the shaft and welded to sector plates and to one another in such a manner that the shaft casing is polygonal in cross section. The structure of this kind of shaft casing is relatively weak and susceptible to deformations in the casing occurring during the operation of the disc filter and also susceptible to permanent dimensional changes resulting particularly from the welding of the casing parts. Further, the same shaft employs support sleeves which are attached to the shaft casing with flange joints and which provide an attachment point for a filter sector of the filter disc and a flow connection for conducting the filtrate, passed through the filter sector, from the filter sector into a filtrate channel inside the shaft. The flange joint in question is, however, relatively difficult to manufacture due to fitting plates necessary for the correct orientation of the support sleeve. Moreover, said flange joint is prone to leaks despite a sealing surface arranged thereto.

US-publication 2008/0035584 A1 and EP-publication 0413178 A2 disclose examples of disc filters comprising a shaft with a casing having a polygonal cross-section.

### Brief description of the invention

It is an object of the present invention to provide a novel and improved disc filter shaft.

The disc filter shaft of the invention is characterized in that at least one casing part comprises at least one fold substantially in the longitudinal direction of the shaft in such a manner that at least one casing part comprises, circumferentially to the shaft, at least two planar casing portions which are at an angle to one another.

The disc filter shaft thus comprises, circumferentially to the shaft, adjacently positioned casing parts, which casing parts are substantially parallel with the longitudinal direction of the shaft and which casing parts together form a casing of a shaft for the disc filter. At least one casing part comprises at least one fold substantially in the longitudinal direction of the shaft in such a manner that at least one casing part comprises, circumferentially to the shaft, at least two planar casing portions which are at an angle to one another.

The fold provides in the casing part a reinforcing structural portion, which prevents changes in the dimensions and form of the shaft resulting from the welding of the casing parts and other loads caused by manufacture and operation. The shaft casing consisting of casing parts including said fold is very strong and dimensionally accurate, and it keeps its form and dimensions well under loading, and consequently the casing may be manufactured of a thinner plate structure than before.

According to an embodiment, the disc filter shaft includes a central shaft, constituting the framework of the shaft, and sector plates attached to the central shaft and directed outwardly from the central shaft, in connection with which sector plates the casing parts are attached to provide the casing for the disc filter shaft. The sector plates are arranged to divide the volume between the central shaft and the casing, circumferentially to the shaft, into filtrate channels separated from one another.

According to an embodiment, the casing part and the sector plate are an integral plate-like structure, and consequently the casing part is obtained by making a fold in the sector plate, substantially in the longitudinal direction of the shaft.

According to an embodiment, the disc filter shaft further comprises support sleeves secured by welding to the casing parts of the shaft so as to attach filter sectors of the filter discs in the disc filter to the shaft. By securing the support sleeves to the casing parts by welding it is possible to provide a simple and tight joint, in which the support sleeve may be readily oriented in a desired direction with respect to the planar part of the casing part.

### Brief description of figures

Some embodiments of the invention will be explained in greater detail in the attached drawings, in which
Figure 1 is a schematic view of a disc filter shaft;
Figure 2 is a schematic end view of a part of a disc filter shaft, and
Figure 3 is a schematic end view of a part of a second disc filter shaft.

In the figures, some embodiments of the invention are shown simplified for the sake of clarity. Like reference numerals refer to like parts in the figures.

### Detailed description of the invention

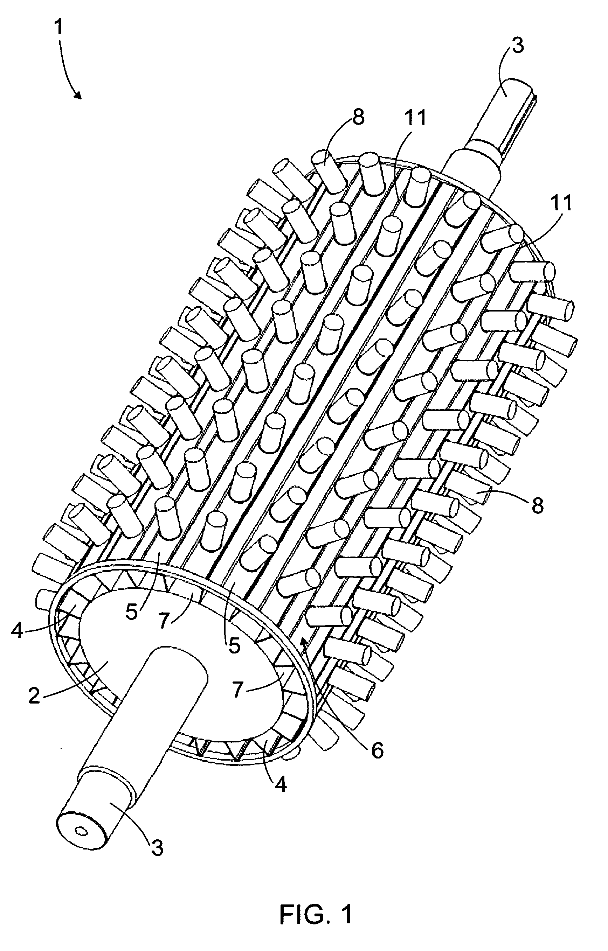

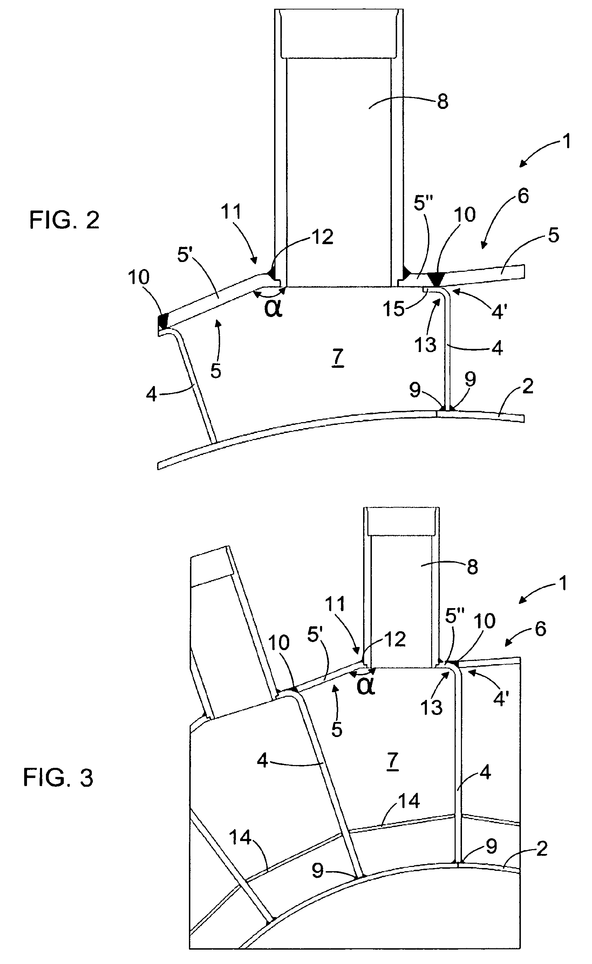

Figure 1 shows schematically a disc filter shaft 1, which hereinafter may also be referred to as the shaft 1. The disc filter shaft 1 includes a central shaft 2, constituting the frame of the shaft 1, and journals 3 through which the shaft 1 is rotatably supported to disc filter bearing blocks, not shown in Figure 1 for the sake of clarity. The shaft 1 further includes sector plates 4 arranged circumferentially to the shaft 1, side by side, with a mutual spacing. The sector plates 4 are plate-like structural elements in the longitudinal direction of the shaft 1, attached to the central shaft 2, directed outwardly from the central shaft 2 and extending substantially throughout the entire length of the central shaft 2. At the end 4' of the sector plates 4 directed outwardly from the central shaft 2 there are secured casing parts 5, circumferentially to the shaft, side by side and substantially parallel with the longitudinal direction of the shaft 1, which casing parts together constitute the casing 6 for the shaft 1. The casing 6 of the shaft 1, the sector plates 4 and the central shaft 2 define within the shaft 1 axial channels 7, or filtrate channels 7, which are in the longitudinal direction of the shaft 1 and separated from one another circumferentially to the shaft 1. Further, the shaft 1 comprises support sleeves 8 secured to the casing 6 of the shaft 1, arranged consecutively in the longitudinal direction of the shaft 1 and adjacently in the circumferential direction of the shaft 1. Each support sleeve 8 provides an attachment point for an individual filter sector of a filter disc in the disc filter, not shown for the sake of clarity, and a flow connection for conducting the pulp suspension filtered through said filter sector into the filtrate channel 7 at the location of the support sleeve 8. For the sake of clarity, Figure 1 does not show filter discs or filter sectors. Some embodiments of the sector plates 4, casing parts 5 and support sleeves 8, and their interconnection, are discussed in greater detail in connection with Figures 2 and 3.

Figure 2 is a schematic end view of a part of a disc filter shaft 1. The shaft 1 for a disc filter in accordance with Figure 2 comprises a central shaft 2 and sector plates 4 attached to the central shaft 2 by weld joints 9 and directed outwardly from the central shaft 2 in the longitudinal direction of the shaft 1. Further, the shaft 1 of Figure 2 includes a casing 6, which consists of casing parts 5 which are substantially in the longitudinal direction of the shaft 1 and arranged side by side circumferentially to the shaft 1. The casing parts 5 are secured by welding both to the sector plate 4, to the end 4' directed outwardly from the central shaft 2, and to casing parts 5 adjacent to each casing part 5, whereby the sector plates 4, the casing parts 5 and the central shaft 2 form filtrate channels 7 inside the shaft 1, which are longitudinally parallel with the shaft 1 and separated from one another circumferentially to the shaft 1.

In the shaft 1 of Figure 2 each casing part 5 comprises a bend 11, in other words, an angle 11 or a fold 11, in the longitudinal direction of the shaft 1 in such a way that each casing part 5 includes in the circumferential direction of the shaft 1 two planar casing portions, i.e. casing portions 5' and 5", which are at an angle α to one another in such a way that the value of the angle α is less than 180 degrees, when the fold 11 is seen in the direction of the central shaft 2. Said fold 11 provides in the casing part 5 a reinforcing structural portion, which prevents changes in the dimensions and form of the shaft 1 resulting from the welding of the casing parts 5 and other loads caused by manufacture and operation of the shaft 1. When complete, the disc filter shaft 1 with the casing 6 provided from casing parts 5 as described above is very strong, dimensionally accurate and it keeps its shape and dimensions well under loading. Because the casing 6 of the shaft 1 is strong by shape, it may also be manufactured from a thinner plate structure than before.

The casing part 5 of Figure 2 includes one fold 11 in the longitudinal direction of the shaft 1 in such a manner that the casing part 5 comprises two planar casing portions 5' and 5" in the circumferential direction of the shaft 1. It is also possible to provide an embodiment, in which the casing part 5 includes more than one fold 11 in the longitudinal direction of the shaft 1, whereby the casing part 5 comprises, circumferentially to the shaft 1, more than two planar casing portions which are at an angle α to one another. In addition, it is also possible to provide an embodiment of the shaft 1, in which all casing parts 5 do not include a fold 11.

In the casing part 5 of Figure 2 the fold 11 is arranged at such a point in the casing part 5 that the casing part 5 will include a planar portion, in the case of Figure 2 the casing portion 5", where a planar securing surface will be provided for a support sleeve 8 of a filter disc sector of the disc filter. The support sleeve 8 may be secured to this planar securing surface in the direction of the perpendicular of the planar part, i.e. in a perpendicular position to the planar surface of the casing portion 5" in the casing part 5. Thanks to the planar securing surface formed by the casing portion 5", the support sleeve 8 may alternatively be secured also to the casing part 5 in a slanted position, whereby the filter sector to be attached to the support sleeve 8 may be readily oriented in a desired direction. Thanks to said fold 11, the support sleeves 8 may be secured to the casing 6 of the shaft 1 by weld joints 12, because the fold 11 reinforces the casing part 5 in such a way that the securing surface of the support sleeve 8 remains planar, and the orientation of the support sleeve 8 does not change during welding, and the welding of the support sleeve 8 to the casing part 5 does not cause changes in the dimensions or shape of the casing part 5 either. As the support sleeves 8 may be secured to the casing 6 of the shaft 1 by welding, it is possible to eliminate the previously used flange joints in the securing of the support sleeves 8, and consequently the number of structural parts decreases, the weight reduces and the manufacturing becomes faster. At the same time, it is also possible to omit a sealing surface included in said flange joint, and thus is achieved a shaft structure which is tighter than before and which eliminates leaks, whereby the capacity of the disc filter increases and the purity grade of the filtrate becomes higher.

To secure the support sleeve 8 by welding directly to the planar casing portion 5' or 5" of the casing part 5 including an angle or a fold is thus a particularly advantageous manner to secure the support sleeve 8. Even though the exemplary embodiments of the figures only describe that the support sleeve 8 is secured by welding directly to a planar surface of the polygonal shaft 1, also a solution, in which the support sleeve 8 is secured by welding directly to a casing surface of shaft 1 having a cylindrical casing, is a substantial improvement over a securing solution for a support sleeve 8, in which the support sleeve 8 is welded to a separate attachment base, which, in turn, has to be secured, fitted and sealed with a bolt joint onto the surface of the shaft 1.

In the solution of Figure 2, the sector plate 4 comprises, at its end 4' directed away from the central shaft 2, a fold 13 in the longitudinal direction of the shaft 1 such that an L-shaped structure is formed at the end 4' of the sector plate 4, comprising a planar portion 15 in connection with the end 4' of the sector plate 4. This planar portion 15 forms a strong planar securing point for a weld joint 10 securing two adjacent casing parts 5 to one another and to the sector plate 4. The casing parts 5 may be welded to the sector plate 4 of this kind in such a manner that the sides of the casing parts 5 in the direction of the shaft 1 are placed against one another, as shown in Figure 2, or at a distance from one another. In the latter case, the sector plate 4 is extended in such a manner that the planar portion 15 of the sector plate 4 extends up to the casing surface, where it constitutes part of the circumferential length of the casing 6 of the shaft 1, i.e. the planar portion 15 of the sector plate 4 forms the casing part 5 to the extent it provides the portion of the casing 6 of the shaft 1 that shows outside the shaft 1. Alternatively, the sector plate 4 could also be a straight plate-like structure, whereby two adjacent casing parts 5 and the sector plate 4 would be interconnected at the end 4' of the sector plate 4 by welding. Further, alternatively, the sector plate 4 may be a straight plate-like structure and the casing part 5 may be attached between the ends 4' of two adjacent sector plates 4 in such a manner that the end 4' of the sector plate 4 constitutes part of the circumferential length of the casing 6, i.e. the end 4' of the sector plate 4 forms the casing part 5 to the extent it provides the portion of the casing 6 of the shaft 1 that shows outside the shaft 1.

In Figure 2, as well as in subsequent Figure 3, the sector plate 4 is attached to the central shaft 2 in such a manner that the sector plate 4 is oriented, substantially in the radial direction of the shaft 1, outwardly from the central shaft 2. Alternatively, the sector plate 4 may be attached to the central shaft 2 also in such a manner that the sector plate 4 is oriented outwardly from the central shaft 2 in a direction substantially deviating from the radial direction of the shaft 1.

Figure 3 is a schematic end view of a part of a second disc filter shaft 1. The disc filter shaft 1 of Figure 3 is substantially similar to the shaft 1 shown in Figure 2, with following differences, however.

The first difference is that in Figure 3 two adjacent sector plates 4 are supported to one another with a plate-like stiffening element 14 which may be used for stiffening the structure of the shaft 1, particularly when the cross-sectional volume of the filtrate channel 7 is large. The stiffening element 14 may extend, longitudinally to the filtrate channel 7, either throughout the entire length of the filtrate channel 7, or only for part of the length of the filtrate channel 7. If the stiffening element 14 extends throughout the entire length of the filtrate channel 7, there are provided openings in the stiffening element 14 in such a manner that the portions of the filtrate channel 7 above and below the stiffening element 14 are in flow communication with one another, and consequently the stiffening element 14 does not substantially restrict the volume of the filtrate channel 7.

The second difference is that in Figure 3 the casing part 5 and the sector plate 4 constitute an integral structure. In the case of Figure 3, the casing part 5 is implemented by forming a fold 13 in the longitudinal direction of the shaft 1 at an end of the sector plate 4 oriented away from the central shaft 2, whereby the sector plate 4 and the casing part 5 together form an L-shaped structure. The casing part 5, in turn, comprises a fold 11 in parallel with the shaft 1, whereby two planar portions are formed in the casing part 5, i.e. the casing portions 5' and 5", which are at an angle α to one another. This structure allows the number of parts to be reduced and said structure is particularly useful when the sector plates 4 and the casing parts 5 are preferably manufactured of equally thick plates. In Figure 3, the angle between the sector plate 4 and the casing part 5 is about 90 degrees, but the value of said angle may also be higher or lower than 90 degrees.

In some cases, features disclosed in this application may be used as such, irrespective of other features. On the other hand, when necessary, features disclosed in this application may be combined to provide different combinations.

The drawings and the related description are only intended to illustrate the idea of the invention. The details of the invention may vary within the scope of the claims.

## Claims

1. A shaft (1) for a disc filter **characterized in that** it comprises circumferentially to the shaft (1) adjacently positioned casing parts (5), which casing parts (5) are substantially parallel with the longitudinal direction of the shaft (1) and which casing parts (5) together form a casing (6) of the shaft (1) for the disc filter, and **in that**
at least one casing part (5) comprises at least one fold (11) substantially in the longitudinal direction of the shaft (1) in such a manner that at least one casing part (5) comprises, circumferentially to the shaft (1), at least two planar casing portions (5', 5") which are at an angle (α) to one another.

2. The disc filter shaft (1) of claim 1, **characterized in that** the disc filter shaft (1) includes a central shaft (2) constituting the framework of the shaft (1) and sector plates (4) attached to the central shaft (2) and directed outwardly from the central shaft (2), in connection with which sector plates the casing parts (5) are attached to provide the casing (6) for the disc filter shaft (1), the sector plates (4) being arranged to divide the volume between the central shaft (2) and the casing (6), circumferentially to the shaft (1), into filtrate channels (7) separated from one another.

3. The disc filter shaft of claim 2, **characterized in that** the sector plate (4) comprises, at the end (4') directed away from the central shaft (2), a fold (13) substantially in the longitudinal direction of the shaft (1), whereby at the end (4') of the sector plate (4) directed away from the central shaft (2) there is provided a planar portion (15) in connection wherewith the casing part (5) is secured.

4. The disc filter shaft of any one of the preceding claims, **characterized in that** the casing part (5) is secured, circumferentially to the shaft (1), both to adjacent casing parts (5) and to the sector plate (4) by weld joints (10).

5. The disc filter shaft of claim 2, **characterized in that** the casing part (5) and the sector plate (4) are an integral plate-like structure, and the casing part (5) is obtained by making a fold (13) in the sector plate (4), substantially in the longitudinal direction of the shaft (1).

6. The disc filter shaft of any one of the preceding claims, **characterized in that** the disc filter shaft (1) further comprises support sleeves (8) for arranging filter sectors of the disc filter discs in connection with the shaft (1) and that the support sleeves (8) are secured to the casing parts (5) of the shaft (1) by weld joints (12).

## Patentansprüche

1. Welle (1) für einen Scheibenfilter, **dadurch gekennzeichnet, dass** sie in Umfangsrichtung der Welle (1) nebeneinander positionierte Mantelteile (5) aufweist, welche Mantelteile (5) wesentlich parallel zur Längsrichtung der Welle (1) sind und welche Mantelteile (5) zusammen einen Mantel (6) der Welle (1) für den Scheibenfilter ausbilden, und dass
zumindest ein Mantelteil (5) zumindest eine Falte (11) wesentlich in Längsrichtung der Welle (1) aufweist, so dass zumindest ein Mantelteil (5) in Umfangsrichtung der Welle (1) zumindest zwei planare Mantelabschnitte (5', 5") aufweist, die in einem Winkel (α) zueinander sind.

2. Scheibenfilterwelle (1) nach Patentanspruch 1, **dadurch gekennzeichnet, dass** die Scheibenfilterwelle (1) eine den Rahmen der Welle (1) bildende Mittelwelle (2) und an der Mittelwelle (2) befestigte und von der Mittelwelle (2) nach außen gerichtete Sektorplatten (4) umfasst, in Verbindung mit denen die Mantelteile (5) befestigt sind, um den Mantel (6) für die Scheibenfilterwelle (1) bereitzustellen, wobei die Sektorplatten (4) angeordnet sind, das Volumen zwischen der Mittelwelle (2) und dem Mantel (6) in Umfangsrichtung der Welle (1) in voneinander abgetrennte Filtratkanäle (7) zu teilen.

3. Scheibenfilterwelle nach Patentanspruch 2, **dadurch gekennzeichnet, dass** die Sektorplatte (4) an dem weg von der Mittelwelle (2) gerichteten Ende (4') eine Falte (13) wesentlich in Längsrichtung der Welle (1) aufweist, wobei an dem weg von der Mittelwelle (2) gerichteten Ende (4') der Sektorplatte (4) ein planarer Abschnitt (15) vorgesehen ist, in Verbindung mit welchem der Mantelteil (5) festgemacht ist.

4. Scheibenfilterwelle nach einem der vorhergehenden Patentansprüche, **dadurch gekennzeichnet, dass** der Mantelteil (5) in Umfangsrichtung der Welle (1) sowohl an angrenzenden Mantelteilen (5) als auch an der Sektorplatte (4) durch Schweißverbindungen (10) festgemacht wird.

5. Scheibenfilterwelle nach Patentanspruch 2, **dadurch gekennzeichnet, dass** der Mantelteil (5) und die Sektorplatte (4) eine integrale plattenähnliche Struktur sind und der Mantelteil (5) bereitgestellt wird, indem eine Falte (13) in der Sektorplatte (4) wesentlich in Längsrichtung der Welle (1) hergestellt wird.

6. Scheibenfilterwelle nach einem der vorhergehenden Patentansprüche, **dadurch gekennzeichnet, dass** die Scheibenfilterwelle (1) ferner Stützhülsen (8) aufweist, um Filtersektoren der Scheiben des Scheibenfilters in Verbindung mit der Welle (1) anzuordnen, und dass die Stützhülsen (8) an den Mantelteilen (5) der Welle (1) durch Schweißverbindungen (12) festgemacht sind.

## Revendications

1. Arbre (1) pour filtre à disques, **caractérisé en ce qu'**il comprend, sur la circonférence de l'arbre (1), des parties boîtiers (5) placées adjacentes, lesquelles parties boîtiers (5) sont sensiblement parallèles à la direction longitudinale de l'arbre (1) et lesquelles parties boîtiers (5) forment conjointement un boîtier (6) de l'arbre (1) pour le filtre à disques, et **en ce que**
au moins une partie boîtier (5) comprend au moins un pli (11) sensiblement dans la direction longitudinale de l'arbre (1) de manière qu'au moins une partie boîtier (5) comprenne, sur la circonférence de l'arbre (1), au moins deux parties boîtiers planes (5', 5'') qui sont situées à un angle (α) les unes par rapport aux autres.

2. Arbre de filtre à disques (1) selon la revendication 1, **caractérisé en ce que** l'arbre de filtre à disques (1) comprend un arbre central (2) constituant le châssis de l'arbre (1) et des plaques de secteurs (4) fixées à l'arbre central (2) et dirigées vers l'extérieur depuis l'arbre central (2), relativement auxquelles plaques de secteurs les parties boîtiers (5) sont fixées pour constituer le boîtier (6) pour l'arbre de filtre à disques (1), les plaques de secteurs (4) étant agencées pour diviser le volume entre l'arbre central (2) et le boîtier (6), sur la circonférence de l'arbre (1), en des canaux de filtrat (7) séparés les uns des autres.

3. Arbre de filtre à disques selon la revendication 2, **caractérisé en ce que** la plaque de secteur (4) comprend, à l'extrémité (4') dirigée loin de l'arbre central (2), un pli (13) sensiblement dans la direction longitudinale de l'arbre (1), grâce à quoi à l'extrémité (4') de la plaque de secteur (4) dirigée loin de l'arbre central (2) est prévue une partie plane (15) relativement à laquelle la partie boîtier (5) est fixée.

4. Arbre de filtre à disques selon l'une quelconque des revendications précédentes, **caractérisé en ce que** la partie boîtier (5) est fixée, sur la circonférence de l'arbre (1), à la fois aux parties boîtiers adjacentes (5) et à la plaque de secteur (4) par des joints de soudure (10).

5. Arbre de filtre à disques selon la revendication 2, **caractérisé en ce que** la partie boîtier (5) et la plaque de secteur (4) sont une structure de type plaque d'un seul tenant, et la partie boîtier (5) est obtenue en réalisant un pli (13) dans la plaque de secteur (4), sensiblement dans la direction longitudinale de l'arbre (1).

6. Arbre de filtre à disques selon l'une quelconque des revendications précédentes, **caractérisé en ce que** l'arbre de filtre à disques (1) comprend, en outre, des manchons de support (8) pour agencer les secteurs de filtre des disques de filtre à disques relativement à l'arbre (1) et **en ce que** les manchons de support (8) sont fixés aux parties boîtiers (5) de l'arbre (1) par des joints de soudure (12).
